# FASCICULE DE BREVET EUROPEEN

(11) **EP 0 607 314 B1**
(45) Date de publication et mention de la délivrance du brevet: **15.05.1996**
(21) Numéro de dépôt: 92921940.0
(22) Date de dépôt: 02.10.1992
(51) Int. Cl.: B60P 1/36

(54) **TOURELLE POUR VEHICULE DE TRANSPORT DE MATERIAUX ET CONVOYEUR TELESCOPIQUE MONTE SUR UNE TELLE TOURELLE**
DREHTURM FÜR EIN MATERIALTRANSPORTFAHRZEUG UND AUF DIESEM DREHTURM MONTIERTER, TELESKOPIERBARER FÖRDERER
TURRET FOR MATERIALS TRANSPORT VEHICLES AND TELESCOPIC CONVEYOR MOUNTED THEREON

(30) Priorité: 08.10.1991 FR 9112490
(43) Date de publication de la demande: 27.07.1994
(73) Titulaire: FAIVRE, Jacques, F-85100 Les-Sables-d'Olonne (FR)
(72) Inventeur: FAIVRE, Jacques, F-85100 Les-Sables-d'Olonne (FR)
(74) Mandataire: Phélip, Bruno
(86) Numéro de dépôt international: FR9200918
(87) Numéro de publication internationale: WO9307027

(56) Documents cités:
- EP-A- 0 424 591
- CA-A- 1 143 321
- DE-B- 1 302 135
- FR-A- 2 332 884

## Description

La présente invention concerne une tourelle destinée aux véhicules de transport de matériaux supportant un dispositif de manutention et en particulier un convoyeurtransporteur ; elle concerne également un tapis transporteur du type télescopique monté sur une telle tourelle.

Le transport de matériaux du type mortier de ciment, s'effectue sur des véhicules spéciaux dénommés toupies, qui comportent, le plus souvent, des moyens d'acheminement du mortier, directement sur la zone d'utilisation.

Le transport du mortier s'effectue au moyen d'un convoyeur à tapis du type à bande sans fin. Ce convoyeur comporte généralement plusieurs tronçons articulés pour permettre notamment sa mise en transport tout en restant dans le gabarit du véhicule porteur. Ces convoyeurs sont installés en porte-à-faux à l'arrière du véhicule de transport et décalés par rapport à l'axe longitudinal ; cette disposition peut provoquer à la longue une déformation du châssis du véhicule, par torsion. Un véhicule de ce type est notamment décrit dans le document FR-A-2 332 884.

Par ailleurs, la longueur de ces convoyeurs demande, lors des manipulations, lors du déploiement ou pour la mise en transport, une grande prudence pour éviter tout contact avec des lignes électriques avoisinant le chantier. Il est connu d'utiliser des convoyeurs du type télescopique, comme décrit dans le document CA-A-1 143 321, comportant les caractéristiques du préambule de la revendication 1. Le convoyeur est installé sur une tourelle classique comportant un axe vertical de giration et un axe horizontal pour l'inclinaison. Mais ce type de matériel reste souvent très encombrant.

La présente invention propose une tourelle et un convoyeur à tapis permettant d'une part de remédier aux inconvénients précités et, d'autre part, d'offrir une plus grande sécurité lors des manoeuvres. La tourelle permet de monter le convoyeur sur le châssis du véhicule de transport de façon appropriée pour éviter les déformations du châssis. Les moyens de manoeuvre de cette tourelle et du convoyeur permettent par ailleurs, lors du déploiement et lors de la mise en transport du convoyeur, de supprimer les risques habituels causés par la présence de lignes électriques.

La tourelle selon l' invention comporte :
- une plateforme solidaire du châssis du véhicule ;
- une couronne d'orientation fixée sur la plateforme et munie, sur sa partie mobile, d'un socle en forme d'étrier soutenant, au moyen d'un axe d'articulation horizontal, le convoyeur ;
- des moyens pour faire varier l'inclinaison du convoyeur autour de son axe d'articulation, comprenant d'une part, un premier vérin qui est interposé entre le socle et un second étrier articulé sur l'axe d'inclinaison du convoyeur, et, d'autre part, un second vérin interposé entre le second étrier et le convoyeur, de façon à réaliser deux types d'inclinaison : une inclinaison pour la mise en position transport du convoyeur ; et une inclinaison pour positionner le convoyeur lors de la phase de déchargement des matériaux.

Selon une disposition complémentaire de l'invention, la tourel le comporte des moyens pour rétracter ou maintenir rétracté le convoyeur lorsque notamment, le vérin de commande de l'inclinaison de mise en transport est actionné.

Toujours selon l'invention, la plateforme de la tourelle est solidaire du châssis du véhicule au moyen d'un bâti qui comprend un système de glissière permettant un déplacement longitudinal de ladite plateforme par rapport au châssis, sous l'effet d'un organe de manoeuvre, pour positionner à volonté le convoyeur sous la chute des matériaux.

Selon une autre disposition de l'invention, le bâti de la tourelle est monté sur un rail qui est disposé transversalement à l'arrière dudit véhicule, et il est mobile par rapport au châssis du véhicule, sous l'effet d'un organe de manoeuvre.

Toujours selon l'invention, le socle de la tourelle est monté pivotant par rapport à la plateforme, selon un axe vertical au moyen d'un système par chaînes et pignon, manoeuvré par le biais de deux vérins dont les tiges sont solidaires respectivement des extrémités de ladite chaîne.

L'invention concerne également le convoyeur télescopique à tapis soutenu par la tourelle, lequel tapis est guidé entre un rouleau amont et un rouleau aval et coopère, au niveau de son brin inférieur, avec des moyens de stockage de la bande lorsque le convoyeur se rétracte. Selon une disposition préférentielle de l'invention, le convoyeur télescopique est constitué de plusieurs tronçons guidés les uns dans les autres, actionnés par un vérin de manoeuvre, chaque tronçon comportant à ses extrémités, des rouleaux de guidage du brin inférieur de la bande du tapis.

Selon une autre disposition de l'invention, le convoyeur comporte, de préférence, à l'extrémité de son dernier tronçon télescopique, une goulotte d'orientation des matériaux.

L'invention sera encore détaillée à l'aide de la description suivante d'un mode de réalisation, et des dessins annexés, donnés à titre indicatif, et dans lesquels :
- la figure 1 est une vue schématique en perspective d'une tourelle montée sur un châssis de véhicule de transport, avec un convoyeur télescopique à tapis ;
- la figure 2 représente un tracé des différentes positions adoptées par le convoyeur télescopique, par rapport au châssis du véhicule, lors du déchargement des matériaux et de sa mise en transport ;
- la figure 3 représente un convoyeur du type télescopique à tapis dans sa position expansée ;
- la figure 4 représente ce même convoyeur dans la position rétractée.

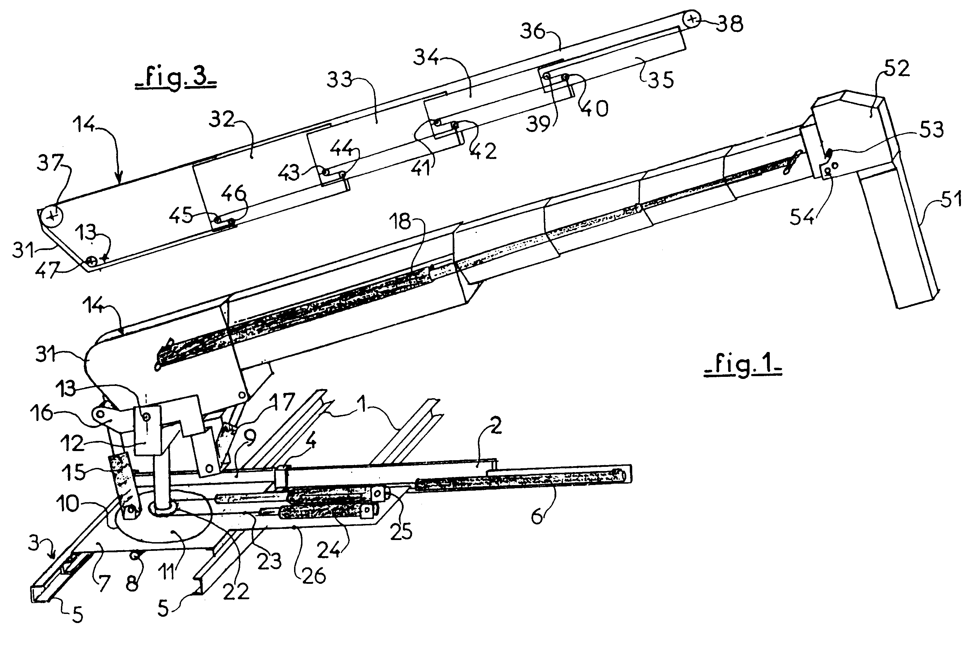

Tel que représenté figure 1, on remarque la seule partie arrière du châssis d'un véhicule de transport de matériaux, non représenté, lequel véhicule est par exemple une toupie de transport et de malaxage de mortier de ciment. Le châssis 1 du véhicule est constitué de deux longerons à l'extrémité desquels est fixé un rail transversal 2. Ce rail transversal s'étend pratiquement sur toute la largeur du véhicule. Il accueille un bâti 3 suspendu au moyen de crochets 4, lequel bâti 3 comporte un système de glissières 5 constitué de deux guides solidaires de sa structure et en particulier des pattes 4 ; ces guides sont disposés longitudinalement à partir du rail 2. Le bâti 3 est mobile transversalement à l'arrière du véhicule au moyen d'un organe de manoeuvre 6 en forme de vérin interposé entre le rail 2 et ledit bâti 3.

Les glissières 5 du bâti 3 accueillent une plateforme 7 mobile longitudinalement, à l'arrière du véhicule, dans le système de glissières 5 au moyen d'un organe de manoeuvre en forme de vérin 8 interposé entre ladite plateforme et la structure 9 du bâti 3 qui est interposée entre les deux crochets 4. Les mouvement longitudinal de la plateforme 7 permet de positionner à volonté le convoyeur sous la coulée des matériaux lors de la vidange de la toupie par exemple.

La plateforme 7 est horizontale à l'arrière du véhicule ; elle comporte une couronne d'orientation 10, centrée sur un axe vertical en son milieu. La partie mobile de la couronne d'orientation 10 comporte un socle 11 dont la partie supérieure forme un étrier 12 ; cet étrier est muni d'un axe d'articulation 13 qui soutient le convoyeur 14. L'axe d'articulation 13 est horizontal et il permet de faire varier l'angle du convoyeur 14 pour le placer soit en position de déchargement, soit en position de transport.

L'inclinaison du convoyeur 14 est réalisée au moyen de deux vérins. Un premier vérin 15 est interposé entre le socle 11 et un second étrier 16 articulé sur l'axe d'inclinaison 13, et un second vérin 17 est interposé entre ledit étrier 16 et le convoyeur 14.

Le vérin 17 est utilisé pour la phase de déchargement des matériaux et en particulier pour ajuster l'inclinaison du convoyeur dans une plage qui va de -10 à +20° environ de part et d'autre de l'horizontale.

Le vérin 15 réalise la manoeuvre du convoyeur 14 et en particulier sa mise en position transport.

Les vérins 15 et 17 sont disposés de part et d'autre de l'étrier 12. Le vérin 15 se situe à l'extrémité amont du convoyeur 14, et son fonctionnement est lié à l'état du vérin 18 servant à l'expansion dudit convoyeur 14. Le vérin 18 et le convoyeur 14 sont rétractés ou maintenus rétractés lorsque le vérin 15 de mise en transport est actionné. En fait, le circuit hydraulique d'alimentation des différents vérins est divisé en deux circuits mis en oeuvre au moyen d'un inverseur. Un premier circuit permet la mise en oeuvre du convoyeur 14 en autorisant l'utilisation des vérins de manoeuvre et, en finale le vérin 18 d'expansion. Un second circuit correspond à la mise en transport et oblige, avant toute autre manoeuvre à rétracter le vérin 18 du convoyeur 14 pour en diminuer l'encombrement et éviter ainsi des interférences avec des lignes électriques ou autres.

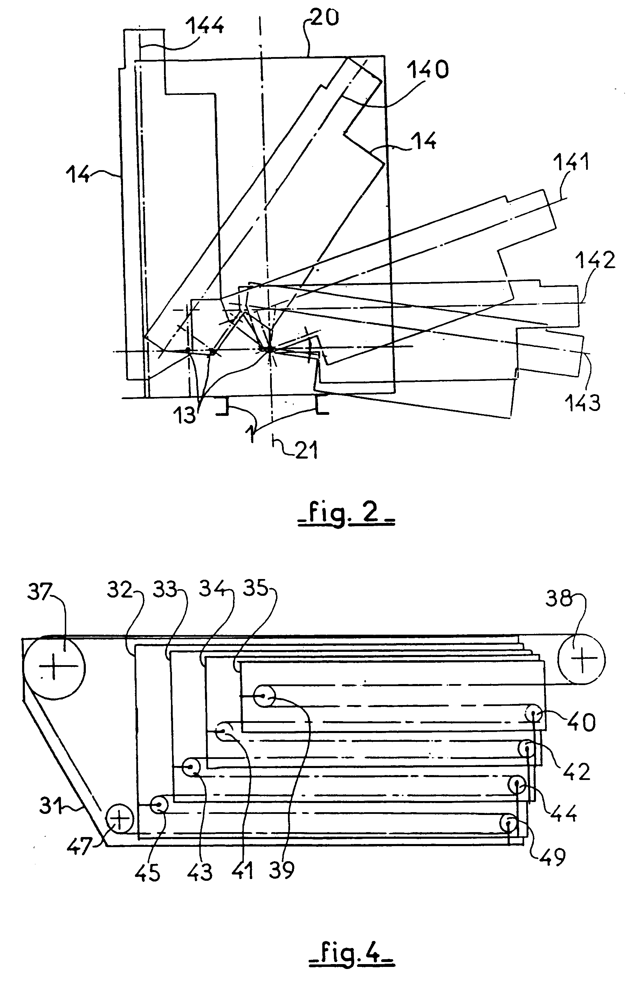

Les différentes positions du convoyeur 14 sont illustrées sur le schéma simplifié de la figure 2. On remarque, sur cette figure 2, le châssis 1 du véhicule de transport ainsi que son gabarit représenté par le cadre 20. En position transport, le convoyeur 14 peut s'inscrire totalement dans le cadre 20 ; il occupe la position 140. Dans cette position, on remarque que l'axe d'inclinaison 13 est décalé sur la gauche par rapport au plan médian 21 du véhicule. Ce déplacement de l'axe 13 est obtenu au moyen d'une translation du bâti 3 sur le rail 2, sous l'effet du vérin de manoeuvre 6.

Pour le déchargement, le convoyeur 14 peut prendre les inclinaisons 141, 142 et 143 telles que représentées figure 2, c'est-à-dire une position 141 inclinée vers le haut selon un angle maximum de 20° par rapport à la position horizontale 142, ou une position inclinée vers le bas selon un angle de l'ordre de -10° par rapport a l' horizontale. L'axe d'inclinaison 13 est représenté centré sur le plan médian 21. Il peut, en fonction de l'arrivée des matériaux, être déplacé transversalement sous l'éffet du vérin de manoeuvre 6, par rapport au plan vertical médian 21.

On remarque, toujours figure 2, que le convoyeur 14 peut également être positionné à la verticale comme représenté en 144, soit sur un côté du véhicule, soit au centre par déplacement de l'axe d'inclinaison 13, afin d'éviter toute déformation du châssis 1 lors du transport notamment.

L'orientation du convoyeur 14 est obtenue par un mouvement de pivotement du socle 11 autour de son axe vertical. Ce pivotement est obtenu au moyen d'un pignon 22 coopérant avec une chaîne 23, laquelle chaîne est mobile sous l'effet de deux vérins de manoeuvre 24 et 25 auxquels elle est reliée par ses deux extrémités, au niveau des tiges respectives desdits vérins. Ces vérins 24 et 25 sont montés sur la plateforme 7, en saillie sur une excroissance latérale 26 comme représenté figure 1.

Le convoyeur 14 est un convoyeur du type télescopique ; il comporte un vérin 18 qui permet son extension ou sa rétraction.

Lors des manoeuvres de déploiement et lors des manoeuvres de mise en transport, un dispositif de sécurité actionne le vérin 18 pour effectuer une rétraction totale du convoyeur 14 avant la mise en service des différents vérins de manoeuvre et notamment du vérin 15 qui place le convoyeur 14 en position transport, comme représenté figure 2 dans la position 140 ou 144. Ce dispositif de sécurité permet de réduire, voire d'annuler les risques d'interférence avec des lignes électriques par exemple. De la même façon, le vérin 18 est maintenu rétracté avant toute manoeuvre des différents vérins de manoeuvre et notamment du vérin 15 visant à mettre le convoyeur 14 en position de déchargement.

On a représenté, figures 3 et 4, un convoyeur télescopique du type à tapis comportant une bande dont le brin inférieur coopère avec des moyens qui permettent de la stocker lors des manoeuvres de rétraction et de la libérer lors de l'expansion du convoyeur télescopique.

On remarque que ce convoyeur 14 est constitué d'un premier tronçon 31 solidaire de la tourelle et en particulier articulé sur l'axe d'inclinaison 13. Ce premier tronçon 31 supporte un second tronçon 32 ; le tronçon 32 supporte un tronçon 33, lequel supporte lui-même un tronçon 34 et ce dernier supporte le tronçon d'extrémité 35. Le vérin 18, comme représenté figure 1, est interposé entre le premier tronçon 31 et le dernier tronçon 35. Un tapis 36, en forme de bande sans fin s'étend entre le rouleau amont 37 guidé dans le premier tronçon 31 et le rouleau aval 38 guidé à l'extrémité du tronçon 35. Le brin supérieur du tapis 36 circule au-dessus des tronçons 31 à 35. Le brin inférieur du tapis 36 s'enroule autour de rouleaux disposés à l'extrémité interne et à l'extrémité externe des tronçons 31 à 35. Ainsi, on remarque que le brin inférieur circule, à partir du rouleau aval 38, sur un rouleau 39 solidaire de l'extrémité interne du tronçon 35, puis s'enroule autour d'un rouleau 40 disposé à l'extrémité externe du tronçon 34. Le brin inférieur continue ensuite sur un rouleau 41 disposé à l'extrémité interne du tronçon 34 pour s'enrouler ensuite sur un rouleau 42 disposé à l'extrémité externe du tronçon 33. De la même façon, on trouve un rouleau 43 à l'extrémité interne du tronçon 33 et un rouleau 44 disposé à l'extrémité externe du tronçon 32 puis un rouleau 45 disposé à l'extrémité interne du tronçon 32 et un rouleau 46 disposé à l'extrémité externe du premier tronçon 31. Un rouleau complémentaire 47 est interposé à l'extrémité inférieure du tronçon 31 entre le rouleau 46 et le rouleau amont 37. Le brin inférieur du tapis 36 s'emmagasine automatiquement grâce aux rouleaux 39 à 46 lors de la rétraction du convoyeur 14, et il se développe à nouveau lors de l'extension du convoyeur, sous l'effet du vérin 18.

On a représenté, figure 4, le convoyeur 14 en position rétractée, montrant le brin inférieur du tapis 36 emmagasiné grâce aux rouleaux d'enroulement 39 à 47, à l'intérieur du premier tronçon 31.

On a également représenté figure 1, une goulotte 50 disposée à l'extrémité aval du convoyeur 14. Cette goulotte comporte une tête 52 articulée autour d'un axe 53 à l'extrémité du convoyeur, lequel axe 53 est parallèle à l'axe d'inclinaison 13. Des orifices 54 permettent de régler l'orientation de la goulotte 51 en fonction des besoins.

Les signes de référence insérés après les caractéristiques techniques mentionnées dans les revendications ont pour seul but de faciliter la compréhension de ces dernières et n'en limitent aucunement la portée.

## Revendications

1. Tourelle pour véhicule de transport de matériaux servant à la fixation d'un convoyeur télescopique sur le châssis dudit véhicule, et comprenant
- une plateforme (7) solidaire dudit châssis (1) du véhicule ;
- une couronne d'orientation (10) fixée sur ladite plateforme (7) et munie sur sa partie mobile, d'un socle (11) soutenant le convoyeur (14) au moyen d'un axe d'articulation (13) et de moyens pour faire varier son inclinaison, caractérisée en ce que les moyens d'inclinaison dudit convoyeur sont constitués de deux vérins (15 et 17) :
- un premier vérin (15) pour réaliser l'inclinaison de mise en transport,
- un second vérin (17) pour réaliser l'inclinaison de transport des matériaux, lequel second vérin (17) est interposé entre le convoyeur et un étrier (16) articulé sur ledit axe (13), lequel étrier (16) étant relié audit socle (11) par ledit premier vérin (15).

2. Tourelle pour véhicule de transport de matériaux, selon la revendication 1, caractérisée en ce qu'elle comporte des moyens pour rétracter ou maintenir rétracté le convoyeur télescopique (14) lorsque notamment, le vérin (15) de mise en position transport dudit convoyeur (14) est actionné.

3. Tourelle pour véhicule de transport de matériaux, selon l'une quelconque des revendications 1 ou 2, caractérisée en ce qu'elle comporte une plateforme (7) solidaire du châsssis (1) au moyen d'un bâti (3) qui comprend un système de glissières (5) permettant un déplacement longitudinal du convoyeur (14) par rapport audit châssis (1), sous l'effet d'un organe de manoeuvre (8) du genre vérin.

4. Tourelle pour véhicule de transport de matériaux, selon la revendication 3, caractérisée en ce qu'elle comporte un bâti (3) mobile par rapport au châssis (1) au moyen d'un rail (2) disposé transversalement et solidaire du châssis (1), lequel bâti est mobile sous l'effet d'un organe de manoeuvre (6) du genre vérin.

5. Tourelle pour véhicule de transport selon la revendication 1, caractérisée en ce qu'elle comporte un socle (11) monté pivotant par rapport à la plateforme (7) au moyen d'un système par pignon (22) et chaîne (23) et deux vérins (24 et 25) dont les tiges sont solidaires respectivement des extrémités de ladite chaîne.

6. Tourelle pour véhicule de transport selon l'une quelconque des revendications 1 à 5, caractérisée en ce qu'elle soutient un convoyeur télescopique (14) comportant un tapis transporteur (36) en forme de bande sans fin guidé entre un rouleau amont (37) et un rouleau aval (38), et coopérant avec des moyens de stockage du brin inférieur de ladite bande, lorsque le convoyeur (14) est en position rétractée.

7. Tourelle pour véhicule de transport selon la revendication 6, caractérisée en ce qu'elle comporte des moyens de stockage du brin inférieur de la bande du tapis transporteur (36), constitués de rouleaux (39 à 47) disposés aux deux extrémités des éléments télescopiques (31 à 35) constituant le convoyeur (14).

8. Convoyeur à tapis pour véhicule de transport de matériaux, monté sur une tourelle selon l'une quelconque des revendications 1 à 5, caractérisé en ce qu'il comporte un tapis transporteur (36) en forme de bande sans fin guidé entre un rouleau amont (37) et un rouleau aval (38), et coopérant avec des moyens de stockage du brin inférieur de ladite bande, lorsque le convoyeur (14) est en position rétractée.

9. Convoyeur à tapis pour véhicule de transport de matériaux selon la revendication 8, caractérisé en ce qu'il comporte des moyens de stockage du brin inférieur de la bande du tapis transporteur (36), constitués de rouleaux (39 à 47) disposés aux deux extrémités des éléments télescopiques (31 à 35) constituant le convoyeur (14).

10. Convoyeur à tapis pour véhicule de transport de matériaux, selon l'une quelconque des revendications 8 ou 9, caractérisé en ce qu'il comporte, à son extrémité aval, une goulotte d'orientation (51) montée sur une tête pivotante articulée autour d'un axe (53) parallèle à l'axe d'articulation (13) et verrouillable dans plusieurs positions.

## Claims

1. A turret deck for a materials transport vehicle used to secure a telescopic conveyor to said vehicle chassis, and comprising:
- a platform (7) integral with said chassis (1) of the vehicle;
- an orientation crown (10) secured to said platform (7) and provided on the movable part thereof with a base plate (11) supporting the conveyor (14) with an hinged shaft (13) and means to provide variation of the tilting thereof, characterized in that the tilting means of said conveyor comprises two cylinders (15 and 17):
- a first cylinder (15) allowing the tilting into the transport position,
- a second cylinder (17) allowing the tilting for the transport of the materials, said second cylinder (17) being interposed between the conveyor and a yoke (16) hinged on the said shaft (13), said yoke (16) being connected to said base plate (11) by said first cylinder (15).

2. A turret deck for a materials transport vehicle according to claim 1, characterized in that it comprises means used to retract the telescopic conveyor (14) or maintain it retracted, in particular upon actuation of the control cylinder (15) for setting said conveyor (14) into the transport position.

3. A turret deck for a materials transport vehicle according to any one of claims 1 or 2, characterized in that it comprises a platform (7) which is made integral with the chassis (1) by means of a frame (3) comprising a sliding rail system (5) to allow longitudinal displacement of the conveyor (14) with respect to said chassis (1) by the action of an actuator (8) of cylinder type.

4. A turret deck for a materials transport vehicle according to claim 3, characterized in that it comprises a frame (3) which is movable relative to the chassis (1) by means of a rail (2) transversally disposed and integral with the chassis (1) which frame is movable by the action of an actuator (6) of cylinder type.

5. A turret deck for a materials transport vehicle according to claim 1, characterized in that it comprises a base plate (11) pivotally supported with respect to the platform (7) by means of a chain (23) and sprocket (22) system and by two cylinders (24 and 25) the rods thereof being integral respectively with the ends of said chain.

6. A turret deck for a materials transport vehicle according to anyone of claims 1 to 5, characterized in that it supports a telescopic conveyor (14) comprising a conveyor belt (36) in the form of an endless belt guided between an upstream roller (37) and a downstream roller (38) and cooperating with means intended for the storage of said band lower belt when the conveyor (14) is in the retracted position.

7. A turret deck for a materials transport vehicle according to claim 6, characterized in that it comprises means intended for the storage of the band lower belt of the conveyor belt (36), that are made of a number of rollers (39-47) disposed to both ends of the telescopic elements (31-35) constitutive of the conveyor (14).

8. A belt conveyor for a materials transport vehicle provided on a turret deck according to anyone of claims 1 to 5, characterized in that it comprises a conveyor belt (36) in the form of an endless belt which is guided between an upstream roller (37) and a downstream roller (38) and cooperating with means intended for the storage of said band lower belt when the conveyor (14) is in the retracted position.

9. A belt conveyor for a materials transport vehicle according to claim 8, characterized in that it comprises means for the storage of the band lower belt of the conveyor belt (36) having rollers (39-47) which are provided to both ends of the telescopic elements (31-35) constitutive of the conveyor (14).

10. Belt conveyor for a materials transport vehicle according to any one of claims 8 or 9, characterized in that it comprises at the downstream end thereof an orientation chute (51) supported on a pivoting head hinged about a shaft (53), which is parallel to the hinged shaft (13) and that can be locked into several positions.

## Patentansprüche

1. Drehturm für ein Materialtransportfahrzeug, der als Befestigung für einen teleskopierbaren Förderer auf dem Rahmen des Fahrzeugs dient und umfaßt:
- eine mit dem Rahmen (1) des Fahrzeugs fest verbundene Plattform (7);
- einen Drehkranz (10), der auf der Plattform (7) befestigt ist und an seinem beweglichen Teil mit einem den Förderer (14) mittels einer Drehachse (13) unterstützenden Sockel (11) und Mitteln versehen ist, um seine Neigung variieren zu lassen, dadurch gekennzeichnet, daß die Neigungsmittel des Förderers aus zwei Zylindern (15 und 17) bestehen:
- einem ersten Zylinder (15), um die Neigung der Transportstellung zu erreichen,
- einem zweiten Zylinder (17), um die Neigung für den Materialtransport zu erreichen, wobei der zweite Zylinder (17) zwischen dem Förderer und einem an der Achse (13) gelenkig angebrachten Bügel (16) eingefügt ist, wobei der Bügel (16) mit dem Sockel (11) durch den ersten Zylinder (15) verbunden ist.

2. Drehturm für ein Materialtransportfahrzeug nach Anspruch 1, dadurch gekennzeichnet, daß er Mittel aufweist, um den teleskopierbaren Förderer (14) zurückzuziehen oder zurückgezogen zu halten, insbesondere wenn der Kolben (15) für die Einstellung des Förderers (14) in Transportposition angetrieben wird.

3. Drehturm für ein Materialtransportfahrzeug nach einem der Ansprüche 1 oder 2, dadurch gekennzeichnet, daß er eine Plattform (7) aufweist, die mittels eines Tragelements (3) mit dem Rahmen (1) fest verbunden ist, welches ein Gleitschienensystem (5) umfaßt, das unter der Einwirkung einer Steuereinrichtung (8) von der Art eines Zylinders in bezug auf den Rahmen (1) eine Verschiebung in Längsrichtung des Förderers (14) gestattet.

4. Drehturm für ein Materialtransportfahrzeug nach Anspruch 3, dadurch gekennzeichnet, daß er ein Tragelement (3) aufweist, das in bezug auf den Rahmen (1) mittels einer Schiene (2) beweglich ist, die quer verlaufend angeordnet und mit dem Rahmen (1) fest verbunden ist, wobei das Tragelement unter der Einwirkung einer Steuereinrichtung (6) von der Art eines Zylinders beweglich ist.

5. Drehturm für ein Transportfahrzeug nach Anspruch 1, dadurch gekennzeichnet, daß er einen Sockel (11) aufweist, der in bezug auf die Plattform (7) mittels eines Systems aus Zahnrad (22) und Kette (23) und zweier Zylinder (24 und 25) drehbar angebracht ist, deren Stangen jeweils mit den Enden der Kette verbunden sind.

6. Drehturm für ein Transportfahrzeug nach einem der Ansprüche 1 bis 5, dadurch gekennzeichnet, daß er einen teleskopierbaren Förderer (14) unterstützt, der ein Transportband (36) in Form eines Endlosbandes aufweist, das zwischen einer stromaufwärtigen Rolle (37) und einer stromabwärtigen Rolle (38) geführt ist und mit den Speichermitteln für das untere Stück des Bandes zusammenwirkt, wenn der Förderer (14) in zurückgezogener Position ist.

7. Drehturm für ein Transportfahrzeug nach Anspruch 6, dadurch gekennzeichnet, daß er Speichermittel für das untere Stück des Bandes des Transportbandes (36) aufweist, die aus Rollen (39 bis 47) bestehen, die an den beiden Enden der teleskopierbaren Elemente (31 bis 35) angeordnet ist, die den Förderer (14) bilden.

8. Förderband für ein Materialtransportfahrzeug, das auf einem Drehturm nach einem der Ansprüche 1 bis 5 angebracht ist, dadurch gekennzeichnet, daß es ein Transportband (36) in Form eines Endlosbandes aufweist, das zwischen einer stromaufwärtigen Rolle (37) und einer stromabwärtigen Rolle (38) geführt ist und mit den Speichermitteln für das untere Stück des Bandes zusammenwirkt, wenn der Förderer (14) in zurückgezogener Position ist.

9. Förderband für ein Materialtransportfahrzeug nach Anspruch 8, dadurch gekennzeichnet, daß es Speichermittel für den unteren Bandabschnitt des Transportbandes (36) aufweist, die aus Rollen (39 bis 47) bestehen, die an beiden Enden der teleskopierbaren Elemente (31 bis 35) angeordnet sind, die den Förderer (14) bilden.

10. Förderband für ein Materialtransportfahrzeug nach einem der Ansprüche 8 oder 9, dadurch gekennzeichnet, daß es an seinem stromaufwärtigen Ende eine Orientierungsrinne (51) aufweist, die an einem schwenkbaren Kopf angebracht ist, der um eine zur Drehachse (13) parallele Achse (53) schwenkbar angebracht und in mehreren Positionen verriegelbar ist.
